# EUROPÄISCHE PATENTSCHRIFT

(11) **EP 0 945 381 B1**
(45) Veröffentlichungstag und Bekanntmachung des Hinweises auf die Patenterteilung: **19.02.2003**
(21) Anmeldenummer: 99105017.0
(22) Anmeldetag: 19.03.1999
(51) Int. Cl.: B65H 23/02, G01B 7/00, G01D 5/20, G01D 5/22

(54) **Vorrichtung zum induktiven Messen der Lage eines Metallbandes**
Apparatus for inductively measuring the position of a metal sheet
Appareil de mesure de la position d'une tôle métallique au moyen inductif

(30) Priorität: 24.03.1998 DE 19812965
(43) Veröffentlichungstag der Anmeldung: 29.09.1999
(73) Patentinhaber: ELEKTRO-MECHANIK GMBH, D-57482 Wenden (DE)
(72) Erfinder: Hempelmann, Willi, 57462 Olpe (DE); Wagner, Harald, 57223 Kreuztal (DE); Münker, Wolfram, 57223 Kreuztal (DE); Schwan, Hubert, 57537 Wissen (DE)
(74) Vertreter: Klingseisen, Franz, Dipl.-Ing.

(56) Entgegenhaltungen:
- EP-A- 0 547 563
- WO-A-89/10651
- CH-A- 647 316
- DE-A- 4 126 921
- FR-A- 1 569 784
- US-A- 5 612 660
- US-A- 5 639 391

## Beschreibung

Die Erfindung betrifft eine Vorrichtung zur induktiven Messung der Lage eines Metallbandes nach dem Oberbegriff des Anspruchs 1 und des Anspruchs 11.

Aus der DE-A-41 26 921 ist es bekannt, die Lage eines Metallbandes induktiv durch Spulen für die Bandlaufregelung zu messen, die langgestreckt und auf beiden Seiten des Bandes über und unter dem Rand des Bandes quer dazu angeordnet sind. Derartige Spulen, die eine Länge von ca. 1 m haben, ergeben eine Messgenauigkeit der Bandlage in der Größenordnung von einigen Millimetern.

FR-A-1569784 beschreibt eine Vorrichtung zum Messen der Längsbewegung eines Magnetelementes, über dem drei relativ kleine Spulen nebeneinanderliegend angeordnet sind, die zur Erhöhung der Messgenauigkeit die gleiche geometrische Gestalt haben sollen und zu diesem Zweck in gedruckter Form ausgebildet sind.

Aus EP-A-0 547 563 ist eine Leiterplattenantenne bekannt, die aus mehreren Lagen von Leiterplatten besteht, die miteinander verbunden sind und deren Oberflächen mit Leiterbahnen belegt sind, so dass sich flächige Teilspulen ergeben.

Aus CH-A-647316 ist eine Vorrichtung zur Umwandlung einer linearen Verschiebung von Maschinen- oder Apparateteilen in ein elektrisches Signal bekannt, wobei zwei trapezförmige Induktions-Messspulen nebeneinander in einer Ebene und parallel zu der in einer anderen Ebene liegenden Erregerspule angeordnet sind.

US-A-5,612,660 beschreibt ein Induktionselement in einer gedruckten Schaltanordnung durch Ausbilden wenigstens zweier oberer und unterer Schichten aus einem leitenden Muster und Isolierschichten dazwischen.

WO-A-8910651 beschreibt eine kontaktlose Kopplungseinrichtung, wobei eine ebene Printspule vorgesehen ist und ein Kondensator auf dem selben Print angeordnet sein kann.

US-A-5,639,391 beschreibt ein elektrisches Bauelement mit einer Anzahl von laminierten Schichten aus Ferritmaterial, wobei jede Schicht eine darauf aufgedruckte leitende Spule aufweist. Die leitende Spule wird zunächst durch Drucken einer leitenden Schicht auf der Ferritlage ausgebildet, wobei dann durch Laserstrahlen die Spule aus der leitenden Schicht ausgeschnitten wird. Hierbei handelt es sich um relativ kleine elektrische Bauelemente wie auch bei den gedruckten Spulen nach FR-A-1569784.

Der Erfindung liegt die Aufgabe zugrunde, bei einer Bandlaufregeleinrichtung der eingangs angegebenen Art die Genauigkeit der Messung der Bandlage zu erhöhen.

Diese Aufgabe wird erfindungsgemäß durch die Merkmale im kennzeichnenden Teil der Ansprüche 1 und 11 gelöst. Dadurch, dass die Spulen in gedruckter Form auf Leiterplatten ausgebildet oder durch Laserstrahlen ausgeschnitten sind, kann die Spulengeometrie, sehr exakt ausgelegt werden. Durch die genaue Spulenausgestaltung kann die Messgenauigkeit erhöht werden. Gegenüber den bekannten gewickelten Spulen erhält man auf diese Weise eine etwa fünfmal höhere Messgenauigkeit.

Die Erfindung wird beispielsweise anhand der Zeichnung näher erläutert. Es zeigen:
- Fig. 1: in perspektivischer Darstellung eine Spulenanordnung für die induktive Bandlagenmessung,
- Fig. 2: eine schematische Draufsicht auf eine auf einer Leiterplatte in gedruckter Form ausgebildete Spule,
- Fig. 3: eine andere Formgebung der Spule,
- Fig. 4: einen Querschnitt durch eine Leiterplatte mit aufgedruckter Spule,
- Fig. 5: einen Querschnitt durch übereinander angeordnete Leiterplatten,
- Fig. 6: einen Querschnitt durch eine andere Ausgestaltung von Leiterplatten,
- Fig. 7: eine schematische Seitenansicht von versetzt übereinander angeordneten Leiterplatten,
- Fig. 8: im Querschnitt einen in einem Isoliermaterial eingekapselten Stapel von Leiterplatten,
- Fig. 9: eine Draufsicht auf eine Leiterplatte mit integriertem Verstärker,
- Fig. 10: in gleicher Darstellung eine Leiterplatte mit integriertem Verstärker,
- Fig. 11: in einer Querschnittsansicht eine Ausführungsform, bei der die auf beiden Seiten der Leiterplatte aufgedruckten Spulen versetzt zueinander sind,
- Fig. 12: eine Draufsicht auf eine auf einer Leiterplatte aufgedruckte Spule mit unterschiedlicher Windungsanordnung,
- Fig. 13: ein Diagramm zur Erläuterung der Meßsteilheit, und
- Fig. 14: ein Schaltbild für eine Spulenanordnung mit Chopper-Verstärker

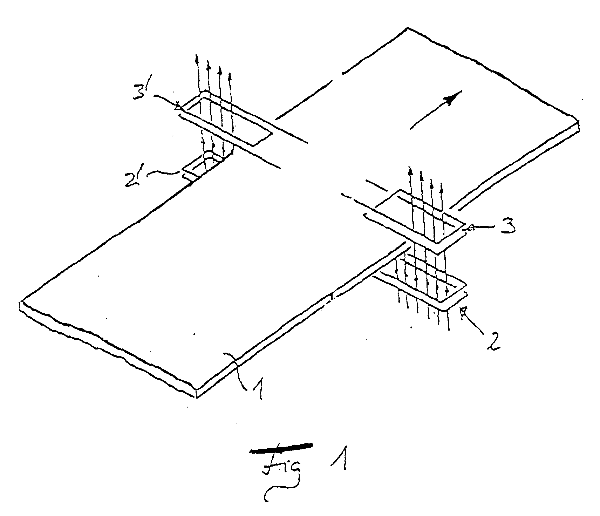

Fig. 1 zeigt schematisch eine Anordnung für die Messung der Mittenlage eines Metallbandes 1, wobei an den beiden Bandkanten jeweils eine Primärspule 2, 2', die bei dem dargestellten Ausführungsbeispiel unter der Bandkante liegt, und eine über der Bandkante, der Primärspule nach Art eines kernlosen Transformators gegenüberliegend angeordnete Sekundärspule 3, 3' vorgesehen ist. Die Spulen sind etwa in Form eines langgestreckten Rechtecks ausgebildet und mit ihrer Längsachse quer zur Bandkante in einem Winkel von 90° symmetrisch zur Bandmitte angeordnet. Vorzugsweise werden die Primärspulen 2, 2' mit einer hohen Betriebsfrequenz von wenigstens 10 kHz betrieben. Auf der Primärund Sekundärseite werden vorzugsweise gleiche Spulen 2 und 3 vorgesehen, so daß sich ein symmetrischer Aufbau ergibt.

Fig. 2 zeigt die Draufsicht auf eine Leiterplatte 4, auf der eine Spule 5 in gedruckter Form aufgebracht ist, wie dies bei gedruckten Schaltungen bekannt ist. Hierdurch ist es möglich, die Geometrie der Spule 5 sehr exakt auszulegen. Die genaue Auslegung der Spulengeometrie ergibt eine erhöhte Genauigkeit bei der Messung der Bandlage. Für die Herstellung der Spule 5 auf der Leiterplatte 4 kann ein an sich bekanntes lithographisches oder photographisches Verfahren verwendet werden. Z.B. kann eine Kupferfolie auf die Leiterplatte 4 aufgebracht werden, die an den nicht benötigten Abschnitten weggeätzt wird.

Bei einem praktischen Ausführungsbeispiel kann die Länge einer Spule 5 auf der Leiterplatte 4 etwa 1 m betragen bei einer Breite von 8 bis 10 cm, wobei etwa 50 Windungen auf die Leiterplatte gedruckt sind. Die Windungen haben jeweils eine Breite kleiner 1 mm, beispielsweise 0,25 mm, und sie haben einen ebenso großen Abstand voneinander bei einer Dicke von etwa 1/10 mm.

Die oben erwähnte symmetrische Anordnung der Spulen in einem Winkel von 90° zur Bandmitte bezieht sich auch auf die symmetrische Anordnung der Spulen zur Mitte der das Band führenden Anlage.

In Fig. 2 sind mit 6 Befestigungslöcher der Leiterplatte 4 bezeichnet, wobei das runde Befestigungsloch 6 als Festlager und die Langlöcher 6' und 6" mit unterschiedlicher Längsausdehnung als bewegliche Lager dienen, damit sich die Leiterplatte bei Temperatureinwirkung in Richtung der Langlöcher 6' und 6" bewegen kann. Das Festlager bei 6 dient für die für eine exakte Messung notwendige genaue Positionierung der Leiterplatte.

Vorzugsweise werden Leiterplatten 4 verwendet, auf deren beiden Seiten jeweils eine Spule 5 in übereinstimmender Form aufgedruckt ist, wobei die Spulen auf den beiden Seiten der Leiterplatte exakt miteinander ausgerichtet sind.

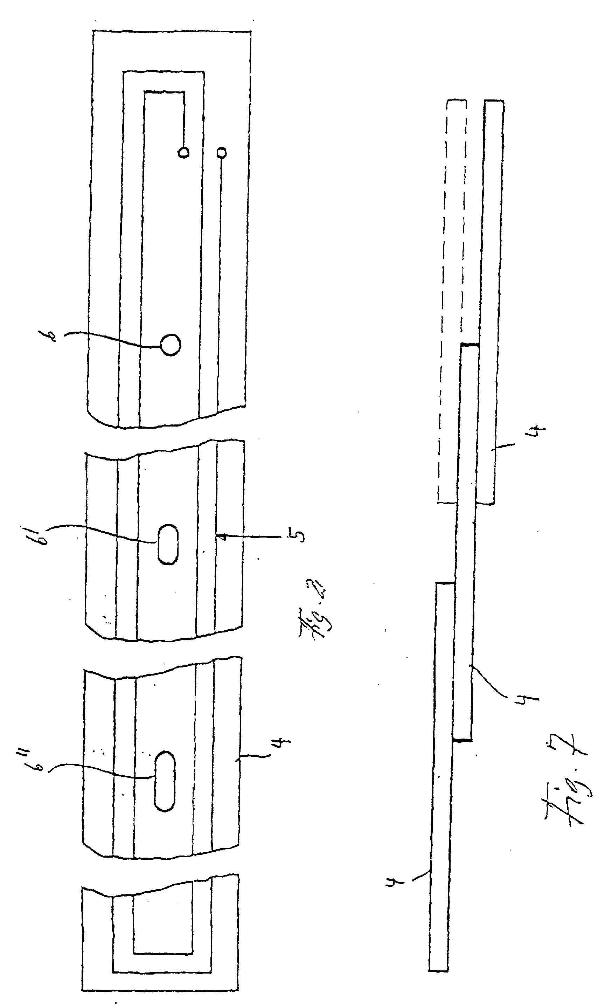

Fig. 3 zeigt eine trapezförmige Spule 5 auf einer Leiterplatte 4, wobei das breitere Ende der Spule der Bandmitte 7 zugewandt ist, und der schmalere Endabschnitt der Spule 5 außen liegt. Durch diese trapezähnliche Spulenform und diese Zuordnung zum Band 1 kann ein Steilheitsunterschied bei der Messung der Spannung über den Weg bei unterschiedlichen Bandbreiten ausgeglichen werden. Hierbei ist das breitere Ende der Spule den kleineren Bandbreiten und das schmalere außenliegende Ende der Spule den größeren Bandbreiten zugeordnet.

Bei kleinerer Bandbreite und einer bestimmten Auslenkung des Bandes während der Bandmittenregelung erhält man ein kleineres Signal als bei einem breiteren Band und gleicher Auslenkung bei einer etwa rechteckigen Spulenform, wie sie Fig. 2 zeigt. Dieser Unterschied in der Signalabgabe kann durch die trapezförmige Spulenform nach Fig. 3 weitgehend kompensiert werden.

Die langgestreckten Seitenabschnitte der Spule 5 können sowohl bei der rechteckigen Spulenform nach Fig. 2 als auch bei der trapezförmigen Spulenform nach Fig. 3 nach innen oder außen gewölbt ausgebildet sein. Mit anderen Worten ist es nicht erforderlich, daß die langgestreckten Seitenabschnitte geradlinig verlaufen.

Fig. 4 zeigt schematisch eine Querschnittsansicht einer Leiterplatte 4 mit aufgedruckten Leitern 5 in Spulenform, wobei die Leiterplatte 4 auf beiden Seiten mit einer Spule 5 bedruckt ist.

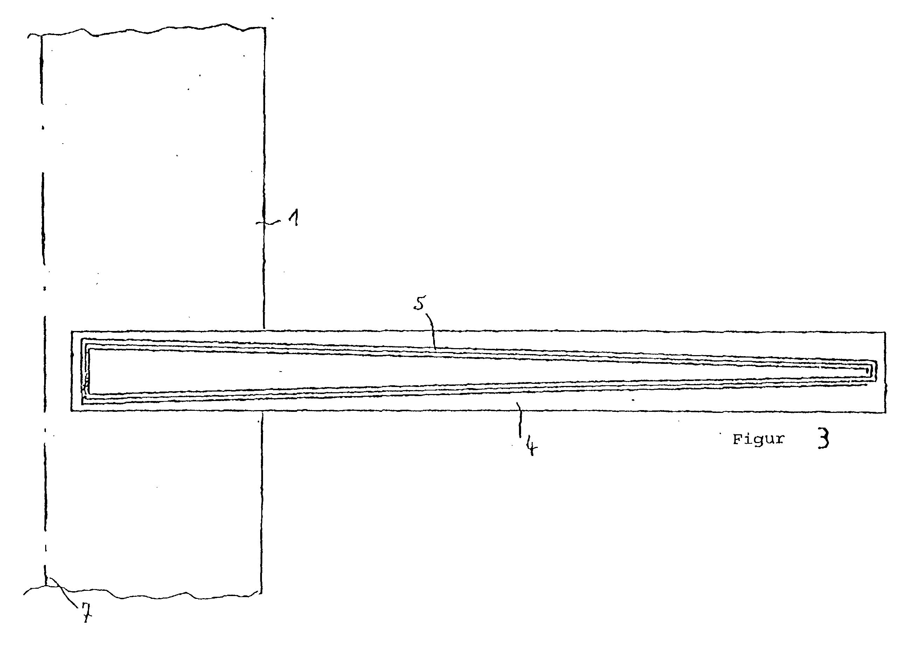

Bei der Ausführungsform nach Fig. 5 sind drei beidseitig bedruckte Leiterplatten 4 übereinander angeordnet, wobei zwischen den Spulen 5 benachbarter Leiterplatten eine Isolierschicht 8 eingelegt ist. Diese Isolierschicht 8 kann auch in Form von Lack auf die Leiterplatten aufgebracht sein.

Fig. 6 zeigt einen Stapel von drei Leiterplatten 4, die aber im Gegensatz zu der Ausführungsform nach Fig. 5 nur einseitig mit einer Spule 5 bedruckt sind. Hierdurch entfällt eine Isolierschicht 8 zwischen den einzelnen Leiterplatten, weil eine Spule 5 an der nicht kaschierten Rückseite einer benachbarten Leiterplatte 4 anliegt. Hierdurch ergibt sich eine kostengünstigere Ausgestaltung als bei der Anordnung nach Fig. 5.

Die übereinander angeordneten Spulen 5 können in Reihe oder auch parallel zueinander geschaltet werden.

Die Dicke der aufgedruckten Spulen 5 kann variieren. Es ist nicht erforderlich, daß der Leiterquerschnitt der einzelnen Spulenwindungen gleichbleibend ausgebildet ist.

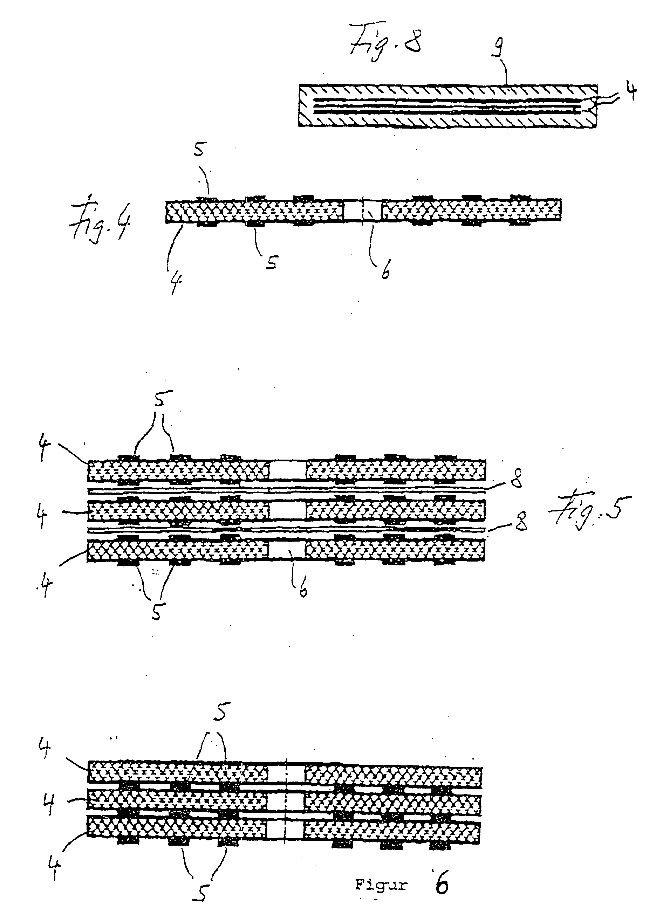

Fig. 7 zeigt in einer schematischen Seitenansicht versetzt übereinander angeordnete Leiterplatten 4, die sich auf einem Längsabschnitt überlappen, so daß sich überlappende Meßbereiche ergeben. Hierdurch erhält man eine höhere Auflösung für eine präzisere Messung. Die sich überlappenden Bereiche müssen nicht gleich lang ausgelegt werden. Beispielsweise kann auch eine Anordnung mit drei übereinander liegenden Leiterplatten 4 vorgesehen werden, bei der nur die mittlere Leiterplatte nach außen vorsteht, wie dies durch gestrichelte Linien in Fig. 7 angedeutet ist. Die Spulen auf den Leiterplatten können elektrisch miteinander verbunden sein. Es ist aber auch möglich, die einzelnen Spulen unabhängig voneinander vorzusehen und diese z. B. getaktet zu betreiben, wobei eine der versetzten Spulen mit Unterbrechungen betrieben wird und während der Unterbrechungen die andere Spule betrieben wird.

Fig. 8 zeigt schematisch drei übereinander liegende Leiterplatten 4, die entsprechend Fig. 5 bis 7 ausgebildet sein können, wobei der Stapel von Leiterplatten 4 in einem elektrisch isolierenden Material 9 eingehüllt ist. Hierfür kann auch ein Schaumstoffmaterial verwendet werden, mittels dem die Leiterplatten eingeschämut werden. Das umhüllende Material 9 kann hierbei zur Festlegung der Position der einzelnen Leiterplatten relativ zueinander verwendet werden. Andererseits ist es auch möglich, die Leiterplatten 4 4 in einem nicht dargestelltem Rahmen, beispielsweise einem Profil oder dgl., anzuordnen, durch das eine exakte Ausrichtung der Leiterplatten übereinander gewährleistet wird. Die exakte Ausrichtung der einzelnen Spulen 5 in einem Stapel von Leiterplatten 4 ist für eine exakte Messung erforderlich.

In gleicher Weise werden für die Halterung der Spulen 2 und 3 auf den beiden Seiten des Bandes genau zueinander ausgerichtete Rahmenteile verwendet, die im einzelnen nicht dargestellt sind. Vorzugsweise werden die Rahmenteile verschweißt, um eine hohe Genauigkeit und Beständigkeit der räumlichen Anordnung zu erhalten. Durch eine präzise Auslegung der Rahmenteile kann die Genauigkeit der Messung unterstützt werden.

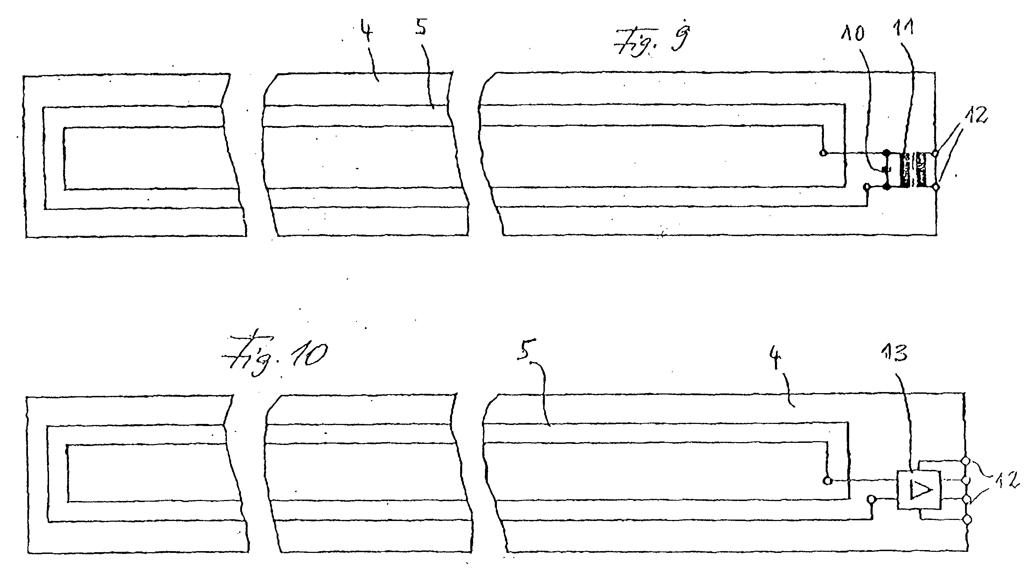

Fig. 9 zeigt in einer Draufsicht auf eine Leiterplatte entsprechend Fig. 2 eine Ausgestaltung, bei der die Anschlüsse der elektronischen Bauteile auf der Leiterplatte 4 aufgedruckt sind. Bei 10 ist ein Resonanzkondensator zwischen den beiden Enden der Spule 5 und bei 11 ein Übertrager bzw. Transformator wiedergegeben, mittels dem über die Anschlußklemmen 12 die Betriebsfrequenz aufgebracht wird. Diese Ausgestaltung bildet einen Sender bzw. eine Primärspule 2 mit einem Parallelschwingkreis.

Fig. 10 zeigt eine Ausgestaltung einer Sekundärspule 3 mit integriertem Differenzverstärker 13, mittels dem die von der Primärspule 2 induzierte Spannung in gut transportable Signale umgewandelt wird.

Fig. 11 zeigt im Querschnitt eine beidseitig mit jeweils einer Spule 5 bedruckte Leiterplatte 4, wobei aber die beiden Spulen 5 und 5' quer zur Bandlaufrichtung zueinander versetzt angeordnet sind.

Eine Anordnung zur Messung der Mittenlage eines Metallbandes zwischen den Spulen auf den beiden Bandseiten umfaßt (ähnlich Fig. 1) an beiden Bandkanten als Primärspule 2 (Sender) und Sekundärspule 3 (Empfänger) jeweils eine solche Leiterplatte mit zueinander versetzten Spulen. Das bedeutet, daß zwei versetzte Spulenpaare (ein Paar aus Sender und Empfänger) an einer Bandkante vorgesehen sind. Diese werden paarweise abwechselnd betrieben, so daß sich für eine Bandkante empfangsseitig zwei unterschiedliche Spannungswerte ergeben, deren Differenz in mV gemessen wird. Bei Kenntnis des geometrischen Spulenversatzes in mm läßt sich unabhängig von der aktuellen Bandlage ein Korrekturfaktor berechnen, der dazu verwendet wird, für alle Bandmaterialien und Bandabmessungen eine ideale Meßsteilheit und eine sehr präzise Messung zu erreichen.

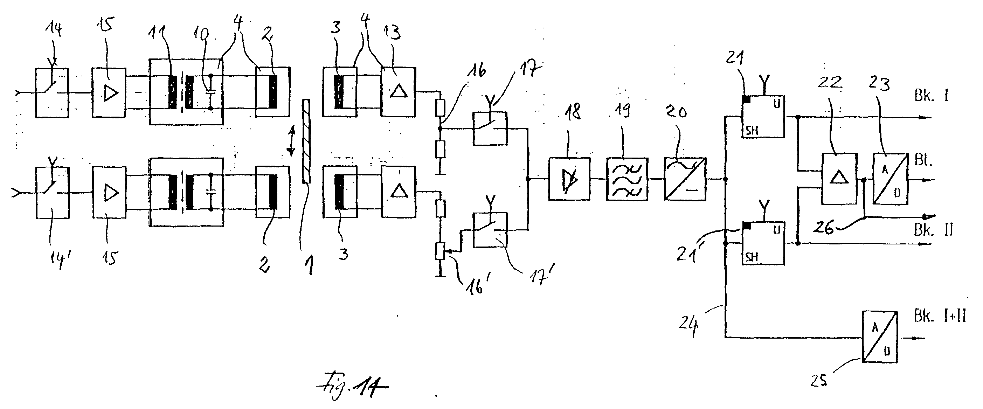

Zur Ermittlung der idealen Meßsteilheit (siehe Fig. 13) kann sich eine solche Anordnung auch auf lediglich eine Bandkante beschränken. An der zweiten Bandkante wird ein Spulenpaar vorgesehen, das aus einer Primärspule (Sender) und einer Sekundärspule (Empfänger) besteht.

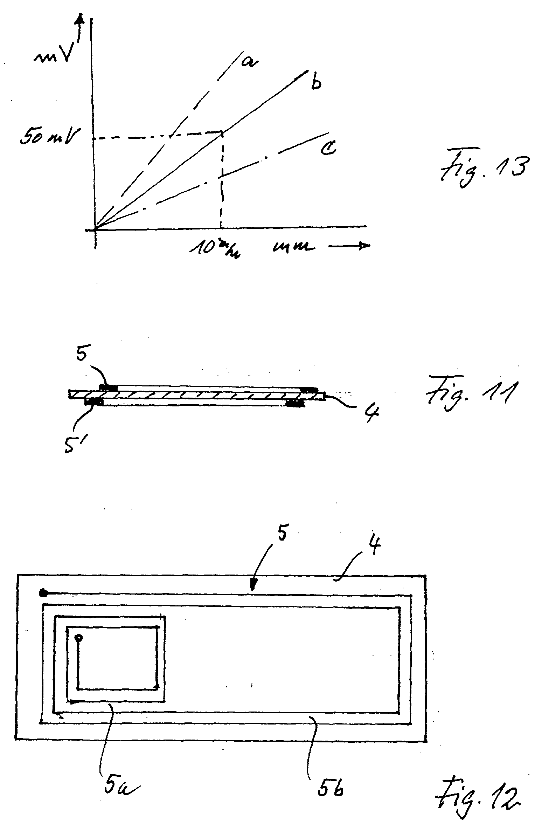

Fig. 12 zeigt eine Draufsicht auf eine Leiterplatte 4, die mit einer Spule 5 bedruckt ist, die eine ungleichmäßige Windungsverteilung über die Spulenlänge bzw. quer zur Laufrichtung des Bandes aufweist. Der dichter mit Windungen belegte Bereich 5a der Spule ergibt ein partiell höheres Sendefeld im Falle einer Sendespule bzw. einen partiell leistungsstärkeren Empfangsbereich im Falle einer Empfängerspule, während der mit weniger Windungen belegte Bereich 5b ein schwächeres Sende- bzw. Empfangsfeld ergibt. Dies wirkt dem geringen Meßeffekt für schmale Bandbreiten entgegen, so daß eine gleichmäßigere Meßsteilheit vor allem bei unterschiedlichen Bandbreiten erhalten wird.

Eine Spulenanordnung nach Fig. 12 kann ebenfalls auf beiden Seiten der Leiterplatte in gleicher Form und miteinander ausgerichtet oder versetzt zueinander vorgesehen werden. Ebenso kann eine solche ungleichmäßige Windungsverteilung mit einer Trapezform nach Fig. 3 und/oder einer versetzten Spulenanordnung beliebig kombiniert werden.

Fig. 13 zeigt ein Diagramm zur Erläuterung der Meßsteilheit, wobei mit a, b und c die Abhängigkeit des Meßsignals mV von dem Verstellweg mm verschiedener Metallbänder 1 relativ zu den Spulen wiedergegeben ist. Bei einem vorgegebenen Metallband 1 hält man dabei eine Kennlinie mit konstanter bzw. stetiger Steigung, wie dies z. B. durch die Gerade b in Fig. 3 wiedergegeben ist.

Wenn durch die Spulen die Lage eines anderen Metallbandes überwacht werden soll, das andere Materialeigenschaften hat und/oder andere Abmessungen, so erhält man eine veränderte Abhängigkeit des Meßsignals mV von der seitlichen Auslegung des Bandes 1 relativ zu den Spulen. Bei einem schmalen und dünnen Metallband erhält man beispielsweise die durch die Linie c wiedergegebene Abhängigkeit der Spannung mV vom Verstellweg, während man für ein breites und dickes Metallband eine Signal- bzw. Meßsteilheit entsprechend der Linie a in Fig. 13 erhält.

Spulen bzw. Spulenanordnungen auf der linken und rechten Seite des Bandes 1 sind jeweils identisch ausgebildet. In gleicher Weise sind die Spulen bzw. Spulenanordnungen auf der Seite der Primärspule und der Sekundärspule in Fig. 1 identisch ausgebildet.

Fig. 14 zeigt schematisch eine Schaltung, mittels der eine zusätzliche Präzision der Messung erreicht werden kann. Links von dem zu überwachenden Band 1, das senkrecht zur Zeichenebene läuft und sich dabei seitlich in Pfeilrichtung bewegt, ist die Senderseite mit zwei Primärspulen 2 im Bereich der Bandkanten vorgesehen, wobei die Primärspulen 2 wie auch die Sekundärspulen 3 in der Form von gedruckten Spulen auf Leiterplatten ausgebildet sein können, wie sie anhand der Fig. 2 bis 10 wiedergegeben sind. Kondensator 10 und Übertrager 11 können auf der Leiterplatte 4 integriert sein, wie Fig. 9 zeigt. Mit 14 sind Schalter bezeichnet, die über Endverstärker 15 jeweils mit dem Übertrager 11 und einem nicht dargestellten Erregerkreis verbunden sind, durch den z.B. eine Betriebsfrequenz von 40 kHz eingespeist wird.

Auf der Empfängerseite sind die Sekundärspulen 3 jeweils mit einem Diffenenzverstärker 13 verbunden, der, wie dies Fig. 10 zeigt, auf einer Leiterplatte 4 integriert sein kann. An die Differenzverstärker 13 schließt sich ein Spannungsteiler 16 an, mittels dem Toleranzen an den beiden Kanälen ausgeglichen werden, bspw. wenn der Empfang an den beiden Sekundärspulen 3 nicht identisch ausfällt. Hierbei dient der feste Teil 16 des Spannungsteilers für einen Ausgleich von bspw. 95%, während der verstellbare Teil 16' des Spannungsteilers für einen Ausgleich von 90 bis 100 % vorgesehen ist. Die beiden Spannungsteiler 16 und 16' sind jeweils über einen Schalter 17 mit einem Verstärker 18, beispielsweise einem Chopperverstärker, verbunden, an den sich eine Auswertelektronik anschließt. Der Verstärker 18 nimmt die Signale von den beiden Sekundärspulen 3 für die Bandmittenregelung auf. Je nach Schaltung der vorzugsweise synchron geschalteten Schalter 14 und 17 bzw. 14*'* und 17' nimmt der Verstärker 18 die von der einen und der anderen Seite nacheinander kommenden Signale auf, wobei ein Betriebszustand vorgesehen ist, in dem kein Signal erfaßt und nur eine verbleibende Rauschspannung ausgewertet wird. Es ist ein Bandpaßfilter 19 vorgesehen, durch das ein Frequenzbereich unter und über der vorgesehenen Betriebsfrequenz von z. B. 40kHz abgetrennt wird. An das Bandpaßfilter 19 schließt sich ein Gleichrichter 20 an, der aus den Wechselspannungssignalen Gleichspannungssignale bildet. An den Gleichrichter 20 sind zwei Sample und Hold-Verstärker 21 und 21' angeschlossen, die abwechselnd die Signale vom Gleichrichter 20 aufnehmen und halten, bis sie weitergegeben werden. Der SH-Verstärker 21 nimmt die Signale von der in Fig. 14 oberen Bandkante (Bk. I) auf, wenn die oberen Schalter 14 und 17 durchgeschaltet sind, während die unteren Schalter 14' und 17' offen sind, während der SH-Verstärker 21' die Signale der gegenüberliegenden Bandkante Bk. II verarbeitet, wenn die unteren Schalter 14' und 17' durchgeschaltet sind, während die oberen Schalter 14 und 17 offen sind. Die Ausgänge der beiden SH-Verstärker 21 und 21' werden einem Differenzverstärker 22 zugeführt, an den sich ein Analog-Digital-Wandler 23 anschließt. Mit B1 ist das die Bandlage wiedergebende Signal bezeichnet, das zur weiteren Verarbeitung weitergeleitet wird.

Vom Gleichrichter 20 führt eine Leitung 24 direkt zu einem Analog-Digital-Wandler 25, der die den beiden Bandkanten entsprechenden Signale vom Gleichrichter 20 zur weiteren Verarbeitung weitergibt.

Fig. 14 zeigt bei 26 eine Leitung, die zwischen dem Verstärker 22 und dem Analog-Digital-Wandler 23 abzweigt, so daß gegebenenfalls ein verstärktes analoges Signal abgenommen werden kann, um beispielsweise Meßbereiche einzuengen.

Durch den beschriebenen Schaltkreis wird eine Verbesserung der Meßgenauigkeit dadurch erreicht, daß der Temperaturgang der Signale auf den beiden Seiten des Bandes gleich ausgelegt wird. Es erfolgt ein Vergleich der Signale mit Differenzbildung, wobei das vom Differenzverstärker 22 abgegebene Signal eine genaue Korrektur der Bandlage zuläßt.

Die Schaltung nach Fig. 14 kann unabhängig von einer gedruckten Spule verwendet werden. Auch wenn sie in Verbindung mit herkömmlichen Spulen 2 und 3 verwendet wird, kann durch diese Schaltung eine Präzisierung der Messung erreicht werden.

Gedruckte Spulen haben aufgrund ihres Aufbaus nur eine begrenzte Temperaturbeständigkeit, so daß sie nur in einer Umgebung eingesetzt werden können, in der keine hohen Temperaturen auftreten, die zu einer Beschädigung der gedruckten Spulen führen würden. Um dennoch eine präzise Spulengestaltung für eine genaue Messung vorsehen zu können, wird nach einem weiteren Aspekt der Erfindung eine aus einem Blech mittels eines Laserstrahls ausgeschnittene Spule vorgesehen. Hierdurch kann für die Spule selbst ein thermisch festeres Material wie Blech verwendet werden, während durch das Ausschneiden der Spule mittels eines Laserstrahls eine geometrisch exakte Spulenform erzielt werden kann. Dadurch kann bei hoher Genauigkeit der Messung durch die genaue Geometrie der Spule eine Bahnlaufregelung auch in einer Umgebung mit Temperaturen bis 1 000°C eingesetzt werden.

Eine derartige durch einen Laserstrahl aus einem Blech ausgeschnittene Spule wird vorzugsweise auf einem isolierenden Träger angeordnet, der die Stabilität der Spule gewährleistet. Insbesondere werden Blechpakete mit solchen lasergeschnittenen Spulen übereinander in exakter Ausrichtung vorgesehen.

## Patentansprüche

1. Vorrichtung zur induktiven Messung der Lage eines Metallbandes (1) bei einer Bandlaufregeleinrichtung, wobei auf einer Seite einer Bandkante wenigstens eine von einer Wechselspannung gespeiste Primärspule (2) und auf der anderen Seite der Bandkante wenigstens eine Sekundärspule (3) angeordnet ist, mit einer Erregerschaltung zum Einspeisen von Wechselspannung in die Primärspule und einer Detektorschaltung zum Bestimmen der in der Sekundärspule durch den Kopplungseffekt mit der Primärspule induzierten Spannung, wobei die Primär- und Sekundärspule etwa in Form eines langgestreckten Rechtecks gewickelt und mit ihrer Längsache quer zur Bandkante angeordnet sind,
**dadurch gekennzeichnet,**
**daß** die Spulen (5) auf einer Leiterplatte (4) in gedruckter Form ausgebildet sind.

2. Vorrichtung nach Anspruch 1,
wobei die Leiterplatten (4) beidseitig mit einer Spule (5) bedruckt sind und die Spulen auf den beiden Seiten der Leiterplatte identisch ausgebildet und miteinander ausgerichtet sind.

3. Vorrichtung nach Anspruch 1 oder 2,
wobei eine Spule (5) eine Länge von etwa 1 m bei einer Breite von 8 bis 10 cm hat, und etwa 50 Windungen auf einer Seite der Leiterplatte aufgedruckt sind.

4. Vorrichtung nach einem der vorhergehenden Ansprüche,
wobei die Spule (5) eine etwa trapezförmige Ausgestaltung derart hat, daß das breitere Spulenende der Bandmitte zugewandt ist und das schmälere Spulenende außen liegt.

5. Vorrichtung nach einem der vorhergehenden Ansprüche,
wobei die Leiterplatte (4) oder übereinander angeordneten Leiterplatten (4) von einem elektrisch isolierenden Material (9) umgeben ist bzw. sind.

6. Vorrichtung nach Anspruch 5,
wobei der Leiterplattenaufbau mit einem elektrisch isolierten Material eingeschäumt ist.

7. Vorrichtung nach einem der vorhergehenden Ansprüche,
wobei übereinander angeordnete Leiterplatten (4) mit Spulen (5) in Längsrichtung versetzt zueinander angeordnet sind, so daß sich überlappende Meßbereiche der einzelnen Spulen ergeben.

8. Vorrichtung nach einem der vorhergehenden Ansprüche,
wobei auf den Leiterplatten (4) elektronische Bauteile integriert sind, wie beispielsweise ein Kondensator (10), ein Übertrager (11) oder ein Differenzverstärker (13).

9. Vorrichtung nach Anspruch 1, wobei die Leiterplatten (4) beidseitig mit einer Spule (5) bedruckt sind und die Spulen auf den beiden Seiten der Leiterplatte quer zur Laufrichtung des Bandes (1) versetzt zueinander angeordnet sind.

10. Vorrichtung nach einem der vorhergehenden Ansprüche, wobei eine Leiterplatte (4) mit einer Spule (5) bedruckt ist,
die eine ungleichmäßige Windungsverteilung aufweist, wobei wenigstens ein Abschnitt (5a) mit mehreren Windungen für ein höheres Sendefeld bzw. Empfangsfeld und wenigstens ein Abschnitt (5b) mit weniger Windungen für ein schwächeres Feld vorgesehen ist.

11. Vorrichtung zur induktiven Messung der Lage eines Metallbandes (1) bei einer Bandlaufregeleinrichtung, wobei auf einer Seite einer Bandkante eine von einer Wechselspannung gespeiste Primärspule (2) und auf der anderen Seite der Bandkante eine Sekundärspule (3) angeordnet ist, mit einer Erregerschaltung zum Einspeisen von Wechselspannung in die Primärspule und einer Detektorschaltung zum Bestimmen der in der Sekundärspule durch den Kopplungseffekt mit der Primärspule induzierten Spannung, wobei die Primär- und Sekundärspule etwa in Form eines langgestreckten Rechtecks gewickelt und mit ihrer Längsachse quer zur Bandkante angeordnet sind,
**dadurch gekennzeichnet,**
**daß** die Spulen (2, 3) mittels eines Laserstrahls aus einem Blech ausgeschnitten sind.

12. Vorrichtung nach den Ansprüchen 1 und 11, wobei auf der Empfängerseite die Sekundärspulen (3) jeweils mit einem Differenzverstärker (13)verbunden sind, an den sich über Schalter (17) getrennt eine gemeinsame Auswerteschaltung (18-20) anschließt, an die Sample- und Hold-Verstärker (21) mit einem nachgeschalteten Differenzverstärker angeschlossen sind, um den Temperaturgang der Signale auf den beiden Seiten des Bandes gleich auszulegen.

## Claims

1. Apparatus for inductively measuring the position of a metal strip (1) in a strip travel regulating device, at least one primary coil (2) fed by an AC voltage being arranged on one side of an edge of the strip and at least one secondary coil (3) being arranged on the other side of the edge of the strip, with an exciter circuit for feeding AC voltage into the primary coil and a detector circuit for determining the voltage induced in the secondary coil as a result of the coupling effect with the primary coil, the primary and secondary coils being wound approximately in the form of an elongate rectangle and having a longitudinal axis arranged transversely with respect to the edge of the strip,
**characterized**
**in that** the coils (5) are arranged in printed form on a printed circuit board (4).

2. Apparatus according to Claim 1,
in which the printed circuit boards (4) have a coil (5) printed on both their sides and the coils on the two sides of the printed circuit board are designed identically and are aligned with one another.

3. Apparatus according to Claim 1 or 2,
in which a coil (5) has a length of approximately 1 m given a width of 8 to 10 cm, and approximately 50 turns are printed on one side of the printed circuit board.

4. Apparatus according to one of the preceding claims,
in which the coil (5) has an approximately trapezium-shaped configuration such that the wider end of the coil faces the centre of the strip and the narrower end of the coil is situated externally.

5. Apparatus according to one of the preceding claims,
in which the printed circuit board (4) or printed circuit boards (4) which are arranged one above the other is or are surrounded by an electrically insulating material (9).

6. Apparatus according to Claim 5,
in which the printed circuit board structure is enclosed in a foamed manner by an electrically insulating material.

7. Apparatus according to one of the preceding claims,
in which printed circuit boards (4) which are arranged one above the other and have coils (5) are arranged such that are offset with respect to one another in the longitudinal direction thereby producing overlapping measurement regions of the individual coils.

8. Apparatus according to one of the preceding claims,
in which electronic components such as, for example, a capacitor (10), a transformer (11) or a differential amplifier (13) are integrated on the printed circuit boards (4).

9. Apparatus according to Claim 1, in which the printed circuit boards (4) have a coil (5) printed on both their sides and the coils on the two sides of the printed circuit board are arranged such that they are offset relative to one another transversely with respect to the travel direction of the strip (1).

10. Apparatus according to one of the preceding claims, in which a printed circuit board (4) has a coil (5) printed on it, which coil has a non-uniform distribution of turns, at least one section (5a) having a plurality of turns being provided for a higher transmission field or reception field and at least one section (5b) having fewer turns being provided for a weaker field.

11. Apparatus for inductively measuring the position of a metal strip (1) in a strip travel regulating device, one primary coil (2) fed by an AC voltage being arranged on one side of an edge of the strip and one secondary coil (3) being arranged on the other side of the edge of the strip, with an exciter circuit for feeding AC voltage into the primary coil and a detector circuit for determining the voltage induced in the secondary coil as a result of the coupling effect with the primary coil, the primary and secondary coils being wound approximately in the form of an elongate rectangle and having a longitudinal axis arranged transversely with respect to the edge of the strip,
**characterized**
**in that** the coils (2, 3) are cut out from a metal sheet by means of a laser beam.

12. Apparatus according to Claims 1 and 11, in which, on the receiver side, the secondary coils (3) are each connected to a differential amplifier (13), which is followed, in a manner isolated via switches (17), by a common evaluation circuit (18-20), to which are connected sample-and-hold amplifiers (21) with a differential amplifier connected downstream, so that the temperature response of the signals is rated identically on the two sides of the strip.

## Revendications

1. Dispositif pour la mesure inductive de la position d'une bande métallique (1) dans un dispositif de régulation de la circulation d'une bande, dans lequel au moins une bobine primaire (2) alimentée par une tension alternative est disposée d'un côté d'un bord de la bande et au moins une bobine secondaire (3) est disposée de l'autre côté du bord de la bande, et comportant un circuit d'excitation servant à appliquer une tension alternative à la bobine primaire, et un circuit de détection pour déterminer la tension induite par la bobine primaire dans la bobine secondaire par l'effet de couplage avec la bobine primaire, la bobine primaire et la bobine secondaire étant enroulées approximativement sous la forme d'un rectangle allongé et étant disposées de telle sorte que leur axe longitudinal est transversal par rapport au bord de la bande, **caractérisé en ce que** les bobines (5) sont agencées sous forme imprimée sur une plaquette à circuits imprimés (4).

2. Dispositif selon la revendication 1, dans lequel les plaquettes à circuits imprimés (4) sont imprimées avec une bobine (5) sur leurs deux côtés, et les bobines situées sur les deux côtés de la plaquette à circuits imprimés sont identiques et alignées l'une sur l'autre.

3. Dispositif selon la revendication 1 ou 2, dans lequel la bobine (5) possède une longueur d'environ 1 mm pour une largeur de 8 à 10 cm, et environ 50 spires sont imprimées sur un côté de la plaquette à circuits imprimés.

4. Dispositif selon l'une des revendications précédentes, dans lequel la bobine (5) possède une forme approximativement trapézoïdale de telle sorte que l'extrémité la plus large de la bobine est tournée vers le centre de la bande et que l'extrémité plus étroite de la bobine est située à l'extérieur.

5. Dispositif selon l'une des revendications précédentes, dans lequel la plaquette à circuits imprimés (4) ou des plaquettes à circuits imprimés (4) superposées est ou sont entourée(s) par un. matériau électriquement isolant (9).

6. Dispositif selon la revendication 5, dans lequel l'agencement des plaquettes à circuits imprimés et l'ensemble des plaquettes à circuits imprimés est enrobé par la mousse d'un matériau électriquement isolant.

7. Dispositif selon l'une des revendications précédentes, dans lequel des plaquettes à circuits imprimés superposées (4) sont disposées avec un décalage réciproque de bobines (5) -dans la direction longitudinale de sorte qu'on obtient des zones de mesure en chevauchement des différentes bobines.

8. Dispositif selon l'une des revendications précédentes, dans lequel des composants électroniques, comme par exemple un condensateur (10), un transformateur (9) ou un amplificateur différentiel (13) sont intégrés dans les plaquettes à circuits imprimés (4).

9. Dispositif selon la revendication 1, dans lequel les plaquettes à circuits imprimés (4) sont imprimées comporte des deux côtés d'une bobine (5) imprimés et les bobines situées des deux côtés de la plaquette à circuits imprimés sont disposées en étant réciproquement décalées transversalement par rapport à la direction de circulation de la bande (1).

10. Dispositif selon l'une des revendications précédentes, dans lequel une bobine (5) est imprimée sur une plaquette à circuits imprimés (4), bobine qui comporte une distribution irrégulière de spires, au moins une section (5a) comportant plusieurs spires étant prévue pour un champ d'émission ou un champ de réception plus intense, et au moins une section (5b) comportant un moins grand nombre de spires est prévue pour un champ plus faible.

11. Dispositif pour mesure inductive de la position d'une bande métallique (1) dans un dispositif de régulation de la circulation d'une bande, dans lequel une bobine primaire (2) alimentée par une tension alternative est disposée d'un côté d'un bord de la bande et une bobine secondaire (3) est disposée de l'autre côté du bord de la bande, et comportant un circuit d'excitation servant à appliquer une tension alternative à la bobine primaire, et un circuit de détection pour déterminer la tension induite par la bobine primaire dans la bobine secondaire par l'effet de couplage avec la bobine primaire, la bobine primaire et la bobine secondaire étant enroulées approximativement sous la forme d'un rectangle allongé et étant disposées de telle sorte que leur axe longitudinal est transversal par rapport au bord de la bande, **caractérisé en ce que** les bobines (2, 3) sont découpées dans une tôle à l'aide d'un faisceau laser.

12. Dispositif selon l'une des revendications 1 et 11, dans lequel côté récepteur les bobines secondaires (3) sont reliées respectivement à un amplificateur différentiel (13), auquel se raccorde séparément, par l'intermédiaire d'interrupteurs (17), un circuit d'évaluation commun (18-20), auquel sont raccordés des amplificateurs d'échantillonnage ou de maintien (21) en aval duquel est branché un amplificateur différentiel, pour rendre l'allure en température des signaux identique sur les deux côtés de la bande.
